# EUROPEAN PATENT APPLICATION

(11) **EP 2 537 719 A1**
(43) Date of publication of application: **26.12.2012**
(21) Application number: 11744655.9
(22) Date of filing: 16.02.2011
(51) Int. Cl.: B60R 25/04, F02D 29/02, F02N 11/08, F02N 15/00

(54) **ENGINE STARTER DEVICE, AND ENGINE STARTER METHOD**

(30) Priority: 18.02.2010 JP 2010033555
(71) Applicant: Fujitsu Ten Limited, Kobe-shi, Hyogo 652-8510 (JP)
(72) Inventor: KOIKE Masaki, Hyogo 652-8510 (JP)
(74) Representative: Ward, James Norman
(86) International application number: PCT/JP2011/053247
(87) International publication number: WO 2011/102369

(57) **Abstract**

An engine activation device that activate an engine installed in a vehicle is provided with an activator, an acquirer, a storage, a prohibiter, and an engine controller. The activator activates the engine in response to a radio signal from a remote controller. The acquirer acquires an authentication result of a key code stored in a vehicle key possessed by a user. In a case where the acquirer acquires an authentication result that the key code fails to be authenticated after the engine is activated by the activator, the storage stores failure information indicative of authentication failure. In a case where the storage stores the failure information, the prohibitor prohibits the activator from activating the engine. Even in a case where the acquirer acquires the authentication result that the key code fails to be authenticated after the engine is activated by the activator, the engine controller keeps the engine from deactivating.

## Description

### Technical Field

The invention relates to a technology of activating an engine installed in a vehicle in response to a command from a remote controller.

### Background Art

A remote engine starter control technology has been known which enables a user to remotely operate a remote controller and to thus activate (remote activation) an engine installed in a vehicle and to warm up the engine until the user gets in the vehicle. According to this technology, in a cold region, the engine has been already warmed up when the user gets in the vehicle. Hence, it is possible to immediately start the vehicle.

In the remote engine starter control, the engine is deactivated when the user opens a door key of the vehicle.

That is, if the engine is continuously driven without deactivating the engine, an unqualified user may break into the vehicle and make an attempt on steal before a user having a qualified key (qualified user) reaches the vehicle from a remote area after the qualified user has activated the engine.

Although there is the above concern, the qualified user may feel inconvenient because the user should again activate the engine, which has been activated by the remote operation and then deactivated, in getting in the vehicle.

In order to solve the inconvenience, JP-A-2006-248471 (Patent Document 1) discloses a technology of authenticating a key code wirelessly acquired from a user key when the user remotely activates an engine and then gets in a vehicle, continuing to drive the engine when an authentication result is a success and deactivating the engine when an authentication result is a failure, thereby removing the above concern and inconvenience.

However, when the suggested technology is adopted, a safety regarding the vehicle traveling may be lowered. Specifically, it takes time for an activation device installed in the vehicle to acquire the authentication result, the authentication may fail due to noises and the like in wireless communication, even based on the key code of the qualified key and since the engine has been activated, the user may run the vehicle before the authentication result is acquired. Hence, when the above cases may occur serially by accident, the engine may be deactivated based on an authentication failure while the vehicle is running, so that the safety regarding the vehicle traveling may be damaged.

Thus, in order to remove the vehicle steal and the inconvenience and to improve the safety regarding the vehicle traveling, when the user opens the door key and gets in the vehicle after remotely activating the vehicle engine, it is considered to keep activating the engine regardless of the authentication result while regarding it as a righteous using.

### Summary of Invention

### Problems to Be Solved by Invention

However, it is relatively easy to unrighteously open the door key of the vehicle. Thus, when the remote controller is stolen, the vehicle may be also stolen relatively easily.

The invention has been made to solve the above problems. An object of the invention is to provide a technology of improving a safety regarding a vehicle traveling while solving concerns about steal of a vehicle adopting a remote engine starter technology and inconvenience thereof when a user uses the vehicle.

### Means for Solving Problems

In order to achieve the above object, the invention provides the followings.
(1) An engine activation device configured to activate an engine installed in a vehicle, comprising: an activator configured to activate the engine in response to a radio signal from a remote controller; an acquirer configured to acquire an authentication result of a key code stored in a vehicle key possessed by a user; a storage configured to store failure information indicative of authentication failure in a case where the acquirer acquires an authentication result that the key code fails to be authenticated after the engine is activated by the activator; a prohibiter configured to prohibit the activator from activating the engine in a case where the storage stores the failure information; and a controller configured to keep the engine from deactivating even in a case where the acquirer acquires the authentication result that the key code fails to be authenticated after the engine is activated by the activator.

(2) According to (1), the engine activation device further comprises an eraser configured to erase the failure information from the storage in a case where the acquirer acquires an authentication result that the key code is duly authenticated.

(3) According to (1) or (2), the engine activation device further comprises a detector configured to detect whether or not the vehicle is running, wherein the controller is configured to deactivate the engine in a case where the detector detects that the vehicle is not running and the acquirer acquires the authentication result that the key code fails to be authenticated after the engine is activated by the activator.

(4) An engine activation method for activating an engine installed in a vehicle, comprising: activating the engine in response to a radio signal from a remote controller; acquiring an authentication result of a key code stored in a vehicle key possessed by a user; keeping the engine from deactivating and storing failure information indicative of authentication failure in a storage, in a case where it is acquired an authentication result that the key code fails to be authenticated after the engine is activated; and prohibiting the engine from being activated by the remote controller, in a case where the failure information is stored in the storage.

### Advantageous Effects of Invention

According to the above configuration, when the engine is remotely activated, the engine activation device prohibits the remote activation of the engine in a case where the information; indicative of the authentication result that the key code fails to be authenticated is stored in the storage. Also, when the acquired authentication result indicates a failure after the engine is remotely activated, the engine keeps driving. Thus, even when a qualified user gets in a vehicle in which the engine has been remotely activated, the engine is not deactivated. Also, it is possible to prevent the vehicle steal by an unqualified user having stolen the remote controller.

Also, according to the above configuration (2), the user can use the remote activation after the authentication succeeds.

Also, according to the above configuration (3), it is possible to securely prevent the vehicle steal by an unqualified user having stolen the remote controller.

### Brief Description of Drawings

FIG. 1 shows a vehicle and a remote controller in a remote engine activation system according to an illustrative embodiment of the invention.
FIG. 2 is a block diagram showing a remote engine activation system according to an illustrative embodiment of the invention.
FIG. 3 is a block diagram illustrating an activation device of the engine activation system shown in FIG. 2, in details.
FIG. 4 is a time chart diagram illustrating timing of control that is executed when a run-on mode is set effective in the engine activation system shown in FIG. 2.
FIG. 5 is a time chart diagram illustrating timing of control that is executed when the run-on mode is set effective in the engine activation system shown in FIG. 2.
FIG. 6 is a flowchart illustrating a sequence of control that is executed when the run-on mode is set effective in the engine activation system shown in FIG. 2.

### Mode to Carry Out Invention

Hereinafter, an engine activation system according to an illustrative embodiment of the invention will be specifically described with reference to the accompanying drawings.

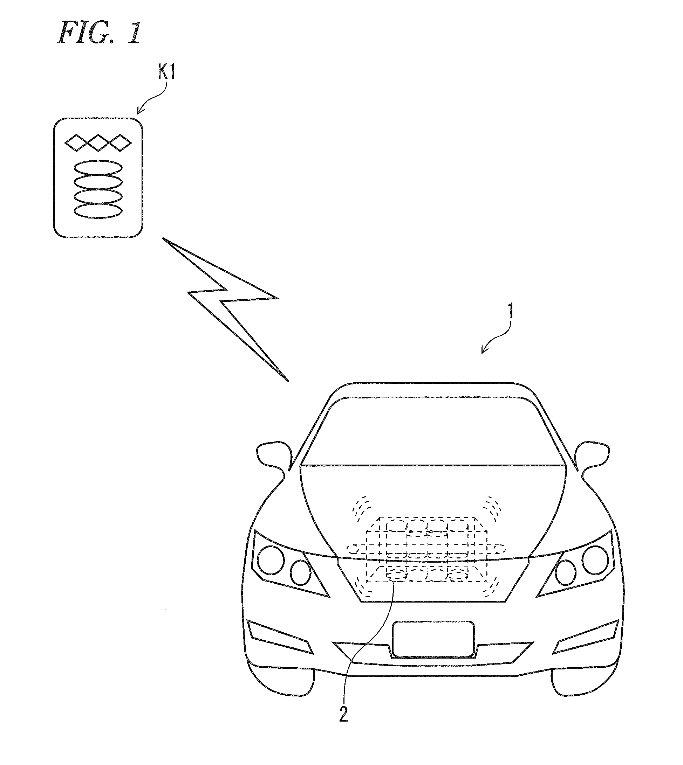

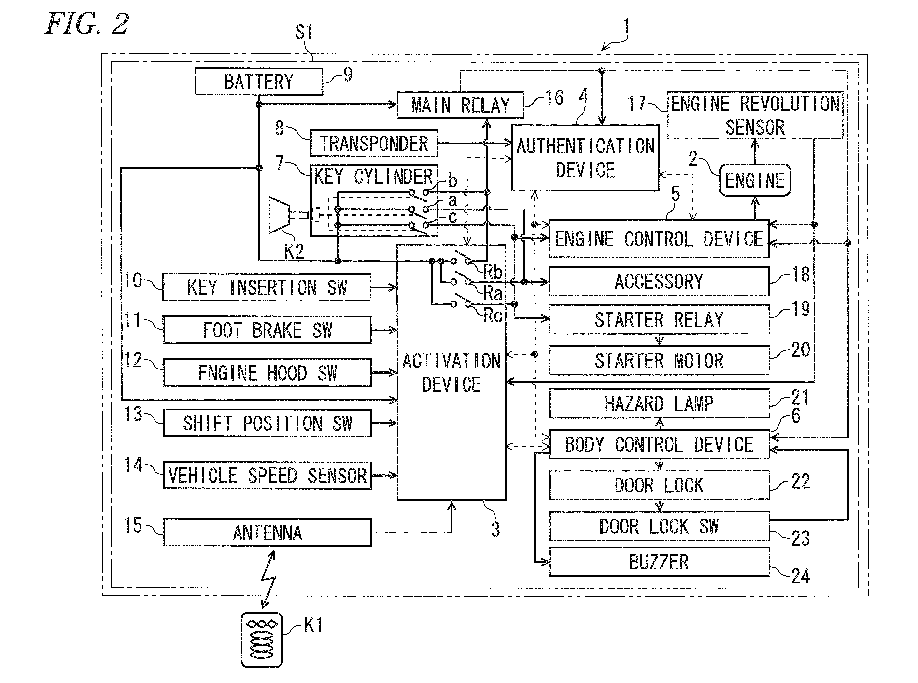

A remote engine activation system that activates an engine installed in a vehicle in response to a remote command transmitted from a remote controller is described with reference to FIGS. 1 and 2.

First, a person who possesses a qualified key of a vehicle 1 is referred to as a qualified user of the vehicle 1 and a person who does not posses a qualified key and unrighteously uses the vehicle 1 is referred to as an unqualified user. Also, it is assumed that the qualified user possesses a remote controller K1 that remotely activates an engine 2 of the vehicle 1.

As shown in FIG. 1, when the qualified user operates a start button of the remote controller K1, the remote controller K1 receives the operation and transmits an activation signal to an activation device installed in the vehicle 1 through a radio communication. The activation device activates the engine 2 installed in the vehicle 1, based on the activation signal received through the radio communication.

### [Engine Activation System]

As shown in FIG. 2, the vehicle 1 has an engine activation system S1 installed therein, which consists of elements implementing a variety of functions for activating the engine 2.

The engine activation system S1 includes the engine 2, an activation device 3, an collation device 4, an engine control device 5, a body control device 6, a key cylinder 7, a transponder 8, a battery 9, a key insertion switch 10, a foot brake switch 11, an engine hood switch 12, a shift position switch 13, a vehicle speed sensor 14, an antenna 15, a main relay 16, an engine revolution sensor 17, an accessory 18, a starter relay 19, a starter motor 20, a hazard lamp 21, a door lock 22, a door lock switch 23, a buzzer 24, the remote controller K1 and a qualified key K2 (vehicle key).

In the meantime, the above elements are directly connected to each other by communication lines or power lines or are connected to each other by a vehicle network.

The engine activation system S1 demonstrates a variety of functions. However, it mainly demonstrates a normal engine activation (first engine activation) function, an engine activation (second engine activation) function based on the remote operation and an authentication function of authenticating a key upon activation.

The engine activation system S1 is configured to turn on a first ACC switch a, a first ignition switch b and a first starter switch c in corresponding order when the qualified user inserts and turns the qualified key K2 into a key insertion slot of a key cylinder 7. When the user turns the qualified key K2 to a position at which the first ACC switch a becomes on, the accessory 18 such as audio, air conditioner control device and the like can be activated. Also, when the user turns the qualified key to a position at which the first ignition switch b becomes on, the main relay 16 turns on, so that the engine control device 5, the body control device 7, the authentication device 4 and the like can be activated.

In the meantime, the activation device 3 is always fed with power. Thus, even when the first ignition switch b does not turn on, the activation device is at an operation state. Alternatively, only the element of the activation device 3 communicating with the remote controller K1 is always fed with power, and the activation device activates the other elements when performing the communication.

### [First Engine Activation Function]

The first engine activation function is realized by the qualified key K2, the key cylinder 7, the starter relay 9, the starter motor 20, the engine 2, the engine control device 5 and the like.

The qualified user inserts the qualified key K2 into the key insertion slot of the key cylinder 7 and turns the same to a position at which the first starter switch c becomes on. When the first starter switch c becomes on, the battery 9 and the starter relay 19 turn on, so that the starter motor 20 is energized and driven. That is, it is possible to drive the starter motor 20 while the qualified user operates the qualified key K2 and turns on the first starter switch c.

Therefore, the qualified user determines that the engine 2 reaches a predetermined revolution (for example, 1,500 rpm), based on engine sound and the like, and stops the operation, so that the first engine activation is executed.

In the meantime, when the engine control device 5 receives a starter switch signal, it controls an ignition plug and an injector provided to the engine 2 and thus drives the engine 2. Also, the engine control device keeps the engine at an idling state, based on a signal received from the engine revolution sensor 17 while it is assisted by the starter motor until the engine reaches a predetermined revolution.

In the meantime, the engine control device 5 has a non-volatile memory in which a program of the first engine activation and the like are stored, a control unit that executes the program, a volatile memory that becomes a working area when executing the program, an interface that performs communication with an external element, and the like.

### [Authentication Function]

The authentication function is realized by the qualified key K2, the transponder 8, the authentication device 4, the engine control device 5 and the like.

When the qualified user inserts the qualified key K2 into the key insertion slot of the key cylinder 7, the transponder 8 receives a key code stored in the qualified key K2 through the radio communication. The transponder 9 transmits the received key code to the authentication device 4. The authentication device 4 determines whether the received key code is consistent with a pre-stored key code. When the key codes are consistent with each other, the authentication device transmits a signal that allows the engine activation (authentication success) to the engine control device 5. Otherwise, the authentication device transmits a signal that prohibits the engine activation (authentication failure) to the engine control device 5. When the engine control device 5 receives a starter switch signal and the permission signal (authentication success) from the authentication device 4, it executes the first engine activation.

In the meantime, the authentication device 4 has a non-volatile memory in which an authentication program and the like are stored, a control unit that executes the program, a volatile memory that becomes a working area when executing the program, an interface that performs communication with an external element, and the like.

### [Second Engine Activation Function]

The second engine activation function is realized by remote controller K1, the antenna 15, the activation device 3, the starter relay 9, the starter motor 20, the engine control device 5 and the like.

When the qualified user operates the engine activation button of the remote controller K1, the remote controller K1 receives the operation and transmiits an activation signal to the activation device 3 installed in the vehicle 1 through the radio communication. The activation device 3 activates the engine 2 based on the activation signal received by the antenna 15 through the radio communication. When activating the engine, the activation device 3 determines that the activation signal is received and that the vehicle can be warmed up (for example, that the key is not inserted, based on a signal from the key insertion switch 10, that a foot brake is not pedaled, based on a signal from the foot brake switch 11, that an engine hood is not opened, based on a signal from the engine hood switch 12, that a shift is located at a parking position, based on a signal from the shift position switch 13 and that a door is not opened, based on a signal from the door lock switch 23), turns on a second ACC switch Ra, a second ignition switch Rb and a second starter switch Rc to turn on the starter switch 19 and drives the starter motor 20, thereby activating the engine 2 together with the engine control device 5.

The engine activation system S1 has two modes of a normal mode and a run-on mode with regard to the second engine activation function. The user can selecte the modes by the remote controller K1 or a switch provided in the vehicle. The modes are specifically described.

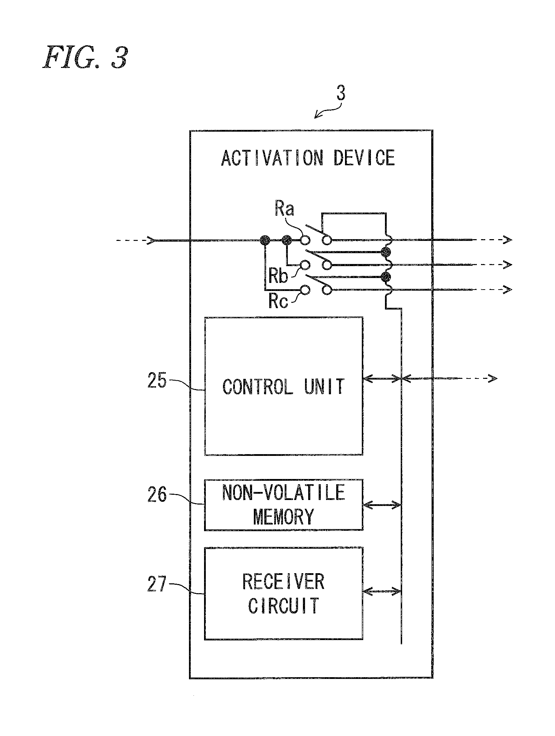

In the meantime, as shown in FIG. 3, the activation device 3 has a non-volatile memory 26 in which a program and the like are stored, a control unit 25 that executes the program, a volatile memory (not shown) that becomes a working area when executing the program, a receiver circuit 27 that controls a signal received from the antenna 15, an interface that perform communication with an external element, and the like.

### (Normal Mode)

The normal mode is described. The normal mode is a mode that deactivates the engine 2 when the user unlocks the door lock 22 in a case where the user remotely activates the engine and then gets in the vehicle.

The normal mode is specifically described. When the user remotely activates the engine 2 by the remote controller K2 and then opens the door by opening the door key, the door lock 22 provided to the door is unlocked and a signal indicating that the door lock switch 23 is unlocked is transmitted to the body control device 6. When the body control device 6 receives the signal indicative of the unlocked state and a signal indicating that the engine 2 is remotely activated through the vehicle network, the body control device transmits a signal that deactivates the engine 2 to the engine control device 5. Thereby, the engine control device 5 deactivates the engine 2.

### (Run-on Mode)

The run-on mode is described. In a case where the qualified user remotely activates the engine by operating the remote controller K1 and then gets in the vehicle, even when the qualified user unlocks the door lock 22 and inserts the qualified key K2, the engine 2 is enabled to continuously drive.

Also, in a case where the unqualified user remotely activates the engine by operating the stolen remote controller K1 and then gets in the vehicle, even when the unqualified user unrighteously unlocks the door lock 22, the engine 2 is enabled to continuously drive. Also, even when the unqualified user inserts an unqualified key in the key cylinder 7 and thus the key authentication fails, the engine 2 is enabled to continuously drive and a next remote activation by the remote controller K1 is prohibited.

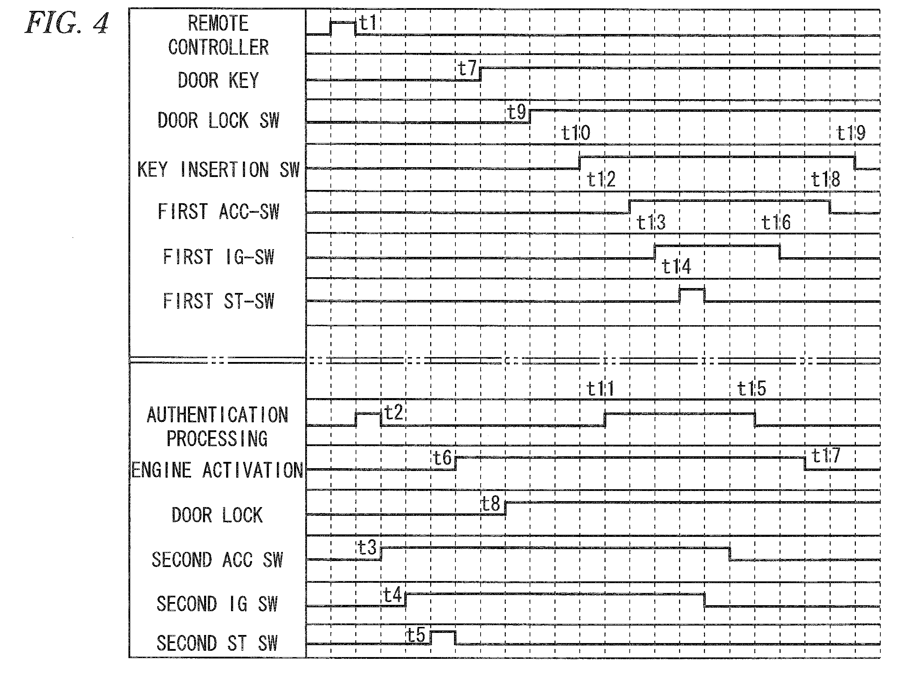

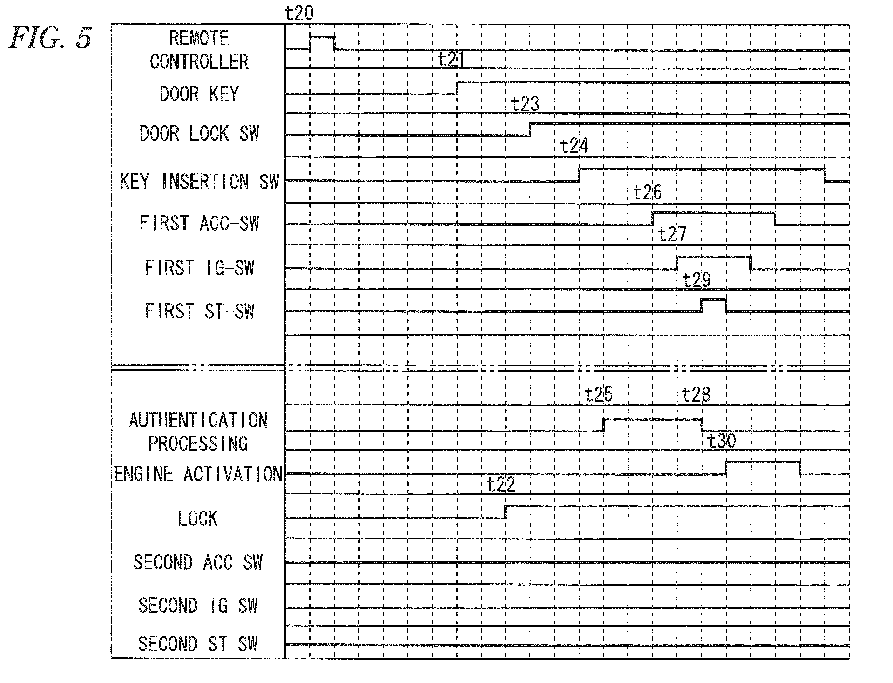

The control timing of the run-on mode is specifically described with reference to time chart diagrams of FIGS. 4 and 5. In the meantime, it is assumed that the run-on mode described in FIGS. 4 and 5 relates to a case where an unqualified user temporarily steals the vehicle 1 and then a qualified user gets back and uses the vehicle again, so as to easily understand the technology.

First, at timing t1 shown in FIG. 4, the unqualified user remotely activates the engine 2 of the vehicle 1 by the remote controller K1 stolen from the qualified user.

Then, at timing t2, the activation device 3 having received the engine activation signal from the remote controller K1 transmits a pseudo key code to the authentication device 4 through the vehicle network. The authentication device 4 executes authentication processing by the authentication function, based on the pseudo key code, and transmits an authentication result (an authentication result is a success, in this case) to the engine control device 5 and the activation device 3 through the vehicle network.

Then, at timing t3, the activation device 3 having received the authentication result of the success from the authentication device 4 turns on the second ACC switch Ra, feeds power to the accessory 18 and thus activates the same.

Then, at timing t4, the activation device 3 turns on the second ignition switch Rb thereof, feeds power to the respective control devices and the like and thus activates the same.

Then, at timing t5, the activation device 3 turns on the second starter switch Rc thereof and thus turns on the starter relay 19, thereby driving the starter motor 20. That is, the activation device activates the engine. Also, the activation device 3 transmits an on signal of the second starter switch Rc to the engine control device 5.

Then, at timing t6, the engine control device 5 having received the on signal of the second starter switch Rc activates the engine 2 and thus renders the same idling.

Then, at timing t7, the unqualified user unrighteously opens the door key provided to the door of the vehicle 1.

Then, at timing t8, the door lock 22 provided to the door of the vehicle 1 is released. That is, the unqualified user gets in the vehicle 1.

Then, at timing t9, the signal of the door lock 23 becomes on, which indicates that the door lock 22 is released.

Then, at timing t10, when the unqualified user gets in the vehicle 1 and then inserts the unqualified key into the key cylinder 7, the signal of the key insertion switch becomes on. When the unqualified key is inserted into the key cylinder 7, the unqualified key transmits the key code, which is stored in the non-volatile memory provided to the unqualified key, to the transponder 8 through the radio communication. Also, the transponder 8 again transmits the received key code to the authentication device 4.

Then, at timing t11, the authentication device 4 having received the key code from the transponder 8 executes the authentication processing by the authentication function, based on the key code. In the authentication processing that is executed by the authentication device 4, it is determined whether the key code is consistent with a code pre-stored in the non-volatile memory 26 of the authentication device 4. When they are consistent with each other, it is determined that the authentication succeeds. When it is determined that they are not consistent with each other, the determination is iterated by a predetermined number of times. When it is not once determined that they are consistent, it is determined that the authentication fails. Therefore, in case of the authentication failure, predetermined time (for example, 10 seconds) is required.

The authentication device 4 starts the authentication determination at timing t11 and ends the authentication determination at timing t15. For the above case, since the authentication result that was made by the authentication device 4 is a failure, the authentication device transmits data indicative of the failure to the engine control device 5 and the activation device 3 through the vehicle network. Also, the activation device 3 functions as the acquirer of the invention and acquires the data indicative of the authentication failure that is the authentication result and stores the data indicative of the authentication failure in the non-volatile memory 26 corresponding to the storage of the invention.

Then, at timing t12, the unqualified user turns the inserted unqualified key to a position at which the first ACC switch a becomes on. Thereby, the accessory 18 is fed with the power and can be thus activated.

Then, at timing t13, the unqualified user turns the inserted unqualified key to a position at which the first ignition switch b becomes on. Thereby, the respective control devices and the like are fed with the power and can be thus activated.

Then, at timing t14, the unqualified user turns the inserted unqualified key to a position at which the first starter switch c becomes on. Thereby, the starter relay 19 turns on, so that the starter motor 20 is driven to activate the engine. Also, the on signal of the first starter switch c is transmitted to the engine control device 5. The engine control device 5 having received the on signal of the first starter switch c activates the engine 2 and thus renders the same idling.

Like this, in the run-on mode, in order to keep activating the engine 2, which has been remotely activated by the user, even after the user gets in the vehicle, it is necessary to insert the key into the key cylinder 7 and to thus turn on the first starter switch c. That is, since it is necessary to enable the authentication device 4 to execute the authentication processing and to turn off the first ignition switch b so as to stop the engine 2 later, it is required to beforehand turn the key to the position at which the first ignition switch b can be off.

Also, as described above, it may take time for the authentication device 4 to start the authentication processing and to obtain the authentication result. For the above case, the predetermined time is consumed from timing t11 to timing t15. Since the engine control device 5 has already activated the engine at timing t6, the unqualified user may run the vehicle 1. In this case, the engine control device 5 functions as the controller of the invention, and keeps activating the engine 1. That is, if the engine 2 is deactivated simply because the authentication result by the authentication device 4 is a failure, the safety regarding the traveling of the vehicle 1 is damaged.

Then, at timing t16, the unqualified user operates the unqualified key to turn off the first ignition switch b.

Then, at timing t17, when the first ignition switch b becomes off, the engine control device 5 having received the corresponding signal deactivates the engine 2. Also, when the main relay 16 becomes off as the first ignition switch becomes off, the power feeding to the respective control devices and the like is disconnected and the functions thereof are thus terminated.

Then, at timing t18, the unqualified user operates the unqualified key to turn off the first ACC switch a. Thereby, the power feeding to the accessory 18 is disconnected and the function thereof is thus terminated.

Then, at timing t19, the unqualified user takes out the unqualified key from the key cylinder 7. Thereby, the signal of the key insertion switch 10 becomes an off signal indicating that the key is not inserted.

Then, at timing t20 shown in FIG. 5, the unqualified user remotely activates the engine 2 of the vehicle 1 by the remote controller K1.

Since the activation device 3 having received the activation signal of the engine 2 from the remote controller K1 stores the data, which indicates the authentication failure, in the non-volatile memory 26, it does not execute the processing for activating the engine 2. That is, the activation device does not control the second ACC switch Ra, the second ignition switch Rb and the second starter witch Rc and does not transmit the on signal of the second starter switch Rc to the engine control device 5.

Thereby, the vehicle 1 may be stolen by the unqualified user having stolen the remote controller, temporarily, but cannot run because the remote activation of the engine thereafter is prohibited. Also, since the unqualified user does not possess a qualified key insomuch as he/she does not steal or illegally copy the same, the unqualified user cannot perform the normal engine activation and thus cannot run the vehicle. That is, since the vehicle may be temporarily stolen but cannot run, it is possible to decrease the unqualified user's will to steal the vehicle. Also, since the qualified user is allowed to use the run-on mode, it is possible to solve the inconvenience that the qualified user should again activate the engine 2 after the remote activation.

Then, at timing t21, the qualified user having gotten back the stolen vehicle 1 opens the door key provided to the door of the vehicle 1.

Then, at timing t22, the door lock 22 provided to the door of the vehicle 1 is released. That is, the qualified user gets in the vehicle 1.

Then, at timing t23, the signal of the door lock switch 23 becomes the on signal indicating that the door lock 22 is released.

Then, at timing t24, when the qualified user gets in the vehicle 1 and then inserts the qualified key K2 into the key cylinder 7, the signal of the key insertion switch 10 becomes on. When the qualified key K2 is inserted into the key cylinder 7, the qualified key K2 transmits the key coder stored in the non-volatile memory thereof to the transponder 8 through the radio communication. Also, the transponder 8 transmits the received key code to the authentication device 4.

Then, at timing t25, the authentication device 4 having received the key code from the transponder 8 starts the authentication processing by the authentication function, based on the key code.

Then, at timing t26, the qualified user turns the inserted qualified switch K2 to the position at which the first ACC switch a becomes on. Thereby, the accessory 18 is fed with the power and can be thus activated.

Then, at timing t27, the qualified user turns the inserted qualified switch K2 to the position at which the first ignition switch b becomes on. Thereby, the respective control devices and the like are fed with the power and can be thus activated.

Then, at timing t28, the authentication device 4 terminates the authentication processing. Since the authentication result determined by the authentication processing is a success, the authentication device 4 transmits the data indicative of the authentication success to the engine control device 5 and the activation device 3 through the vehicle network. Also, the activation device 3 functions as the eraser of the invention, and erases the data indicative of the authentication failure b, which is stored in the non-volatile memory 26. That is, as the authentication result is the success, it is determined that the vehicle 1 temporarily stolen is returned to the qualified user and the remote activation of the engine by the qualified user thereafter is enabled.

Then, at timing t29, the qualified user turns the inserted qualified key K2 to the position at which the first starter switch c becomes on. Thereby, the starter relay 19 turns on, so that the starter motor 20 is driven to activate the engine. Also, the on signal of the first starter switch c is transmitted to the engine control device 5.

Then, at timing t30, the engine control device 5 having received the on signal of the first starter switch c activates the engine 2 and thus renders the same idling.

Then, the method of deactivating the engine 2 of the vehicle 1 is the same as the above method. Thus, the description thereof is omitted.

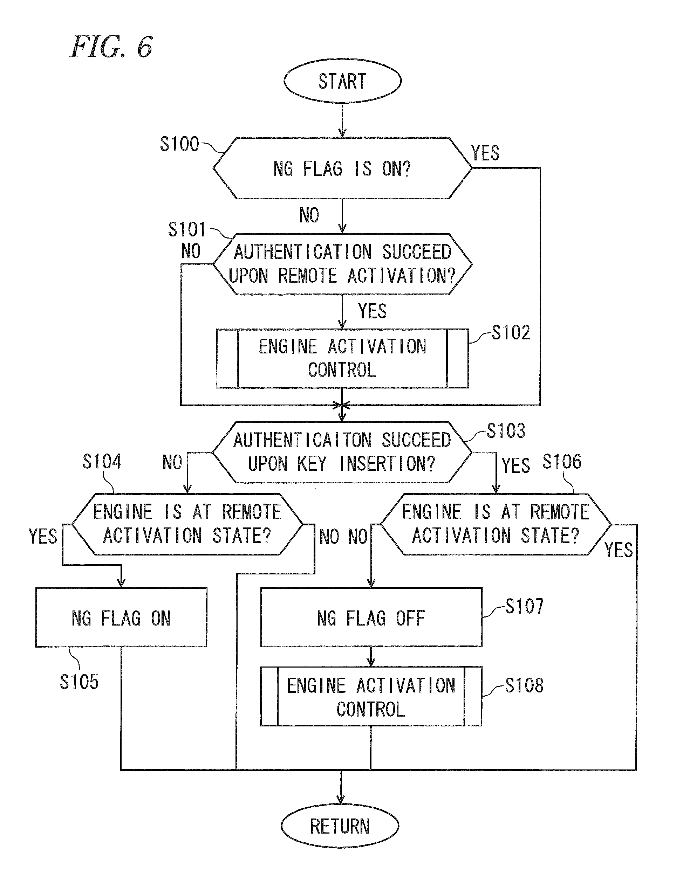

In the below, a sequence of the control that is executed in the run-on mode is specifically described with reference to FIG. 6. In the meantime, the control shown in FIG. 6 is executed with a predetermined period after the engine activation system S1 of the vehicle 1 starts until it ends.

At step S100, the activation device 3 of the system S1 determines whether an NG flag stored in the non-volatile memory 26 thereof is on. When the NG flag is not on (NO at step S100), the sequence proceeds to a step S101. When the NG flag is on (YES at step S100), the sequence proceeds to a step S 103. In the meantime, the NG flag is off at an initial state. Also, a meaning of the NG flag is described later.

At step S101, when remotely activating the engine, it is determined whether the authentication processing, which the authentication device 4 executes by the authentication function, succeeds. When the authentication processing succeeds (YES at step S101), the sequence proceeds to a step S102. When the authentication processing fails (NO at step S101), the sequence proceeds to a step S103.

The authentication function of the authentication device 4 is specifically described. The activation device 3 having received the engine activation signal from the remote controller K1 transmits the pseudo key code to the authentication device 4 through the vehicle network. The authentication device 4 executes the authentication processing by the authentication function, based on the pseudo key code, and transmits the authentication result (the authentication result is a success, in this case) to the engine control device 5 and the activation device 3 through the vehicle network.

At step S102, the activation device 3 and the engine control device 5 activate the engine 2, as described above. After activating the engine 2, the engine control device 5 renders the engine idling. Then, the sequence proceeds to the step S103.

At step S103, when the key is inserted into the key cylinder 7, the authentication device 4 authenticates whether the key is a qualified key or not. When the key is a qualified key, it is determined that the authentication processing succeeds. When the key is not a qualified key, it is not determined that the authentication processing succeeds. When it is determined that the authentication processing succeeds (YES at step S103), the sequence proceeds to a step S106. When it is not determined that the authentication processing succeeds (NO at step S103), the sequence proceeds to a step S 104.

The authentication function of the authentication device 4 is specifically described. When the key is inserted into the key cylinder 7, the key code stored in the non-volatile memory of the key is transmitted to the transponder 8 through the radio communication and the transponder 8 transmits the received key code to the authentication device 4. The authentication device 4 determines whether the key code received from the transponder 8 is consistent with the code pre-stored in the non-volatile memory. When the codes are consistent, it is determined that the authentication succeeds. When it is determined that they are not consistent, the determination is iterated by a predetermined number of times. When it is not once determined that they are consistent, it is determined that the authentication fails. When the authentication succeeds, the authentication device 4 transmits the data indicative of the authentication success to the activation device 3 and the engine control device 5. When the authentication fails, the authentication device transmits the data indicative of the authentication failure to the activation device 3 and the engine control device 5.

At step S104, the activation device 3 determines whether the engine 2 is remotely activated. When it is determined that the engine 2 is remotely activated (YES at step S 104), the sequence proceeds to a step S105. When it is not determined that the engine is remotely activated (NO at step S104), the sequence proceeds to a return.

At step S 105, the activation device 3 sets the NG flag on, which is set in the non-volatile memory 26 thereof.

That is, when the authentication, which is executed upon key insertion, fails at step S103 and the engine 2 is remotely activated, the activation device 3 continues to activate the engine 2 without deactivating the engine even though the authentication fails and sets the NG flag on, thereby prohibiting a next remote activation of the engine.

At step S106, the activation device 3 determines whether the engine 2 is remotely activated. When it is determined that the engine is remotely activated (YES at step S106), the sequence proceeds to the return. When it is not determined that the engine is remotely activated (NO at step S 106), the sequence proceeds to a step S107.

At step S107, the activation device 3 sets the NG flag off, which is set in the non-volatile memory 26 thereof. Then, the sequence proceeds to a step S108.

At step S108, since the engine control device 5 has received the data indicative of the authentication success from the authentication device 4, the engine control device activates the engine 2 and thus renders the same idling while it is assisted by the driving of the starter motor to be driven by the operation of the qualified key K2 of the user.

That is, when the authentication result, which is executed as the qualified user operates the qualified key K2, is a success, the engine control device executes the normal engine activation and sets the NG flag off (the activation is permitted), which indicates whether the remote activation of the engine is permitted, thereby enabling the qualified user to righteously use the vehicle 1.

Hence, the NG flag is a flag that becomes on and thus prohibits a next remote activation of the engine when the unqualified user unrighteosuly uses the vehicle 1 and becomes off and thus permits a next remote activation of the engine when the qualified user righteously uses the vehicle.

The engine activation system S1 executes the above control. Thereby, although the vehicle may be temporarily stolen by the unqualified user having stolen the remote controller K1, the remote activation of the engine 2 thereafter is prohibited, so that the vehicle is disabled from running. Also, since the unqualified user does not possess a qualified key insomuch as he/she does not steal or illegally copy the same, the unqualified user cannot perform the normal engine activation and thus cannot run the vehicle. That is, since the vehicle may be temporarily stolen but cannot run, it is possible to decrease the unqualified user's will to steal the vehicle. Also, since the qualified user is allowed to use the run-on mode, it is possible to solve the inconvenience that the qualified user should again activate the engine 2 after the remote activation.

### <Modified Embodiment>

Although the illustrative embodiment of the invention has been described, the invention is not limited to the illustrative embodiment and a variety of modifications can be made. In the below, the other illustrative embodiments are described. The below illustrative embodiments can be appropriately combined.

### <First Modified Embodiment>

In the above illustrative embodiment, when the key is inserted into the key cylinder 7, the key code stored in the non-volatile memory of the key is transmitted to the transponder 8 through the radio communication and the transponder 8 transmits the received key code to the authentication device 4. The authentication device 4 determines whether the key code received from the transponder 8 is consistent with the code pre-stored in the non-volatile memory. When the codes are consistent, it is determined that the authentication succeeds, and when it is not determined that the codes are consistent, the determination is iterated by a predetermined number of times. When it is not once determined that they are consistent, it is determined that the authentication fails. Regarding this, a so-called smart entry system may be adopted. In the smart entry system, a portable entry device transmits the key code to the body control device 6 through the radio communication, the body control device 6 transmits the key code to the authentication device 4 through the vehicle network and the authentication device 4 performs the above authentication processing, based on the key code.

Also, the authentication device 4 transmits the authentication result to the body control device 6 and the engine control device 5. When the authentication result is a success, the body control device 6 opens the door key, and when the authentication result is a failure, the body control device keeps the door key closed. When the qualified user tries to activate the engine and the authentication result is a success, the engine control device 5 activates the engine 2. When the qualified user tries to activate the engine and the authentication result is a failure, the engine control device 5 prohibits the engine 2 from being activated.

The activation operation is executed as the user operates a push button of a push-type engine start device provided to the engine activation system S1, instead of the key cylinder 7. The push-type engine start device is configured to execute an ACC function, an ignition function and a starter function depending on the number of times of the pushing and the long pushing time.

Thereby, the same effects as the above illustrative embodiment can be obtained.

### <Second Modified Embodiment>

In the above illustrative embodiment, when the key is inserted into the key cylinder 7, it is determined whether the authentication result by the authentication device 4 is a success (step S103). When it is not determined that the authentication result is a success, it is determined whether the engine 2 is remotely activated (step S104). When it is determined that the engine 2 is remotely activated, the NG flag is set to be on (step S105), so that a next remote activation is prohibited. Regarding this, when it is determined at step S104 that the engine 2 is remotely activated, in a case where the vehicle speed is determined zero based on the signal from the vehicle speed sensor 14 or in a case where the shift position is determined P based on the signal from the shift position switch 13, the corresponding elements function as the detector of the invention. When it is determined (detected) that the vehicle 1 is at the non-running state, the activation device 3 functions as the controller of the invention and may transmit a signal of deactivating the engine 2 to the engine control device 5. Meanwhile, also in this case, when the vehicle 1 is running, the activation device 3 continues to activate the engine 2.

Thereby, it is possible to solve the concern that the vehicle 1 may be temporarily stolen by the unqualified user having stolen the remote controller K1.

In the above illustrative embodiment, the various functions are implemented in software by the calculation processing of the CPU in response to the program. However, a part of the functions may be implemented by an electrical hardware circuit. To the contrary, a part of the functions implemented by the hardware circuit may be implemented in software.

Also, in the above illustrative embodiment, the information indicative of the authentication failure is stored in the non-volatile memory 26 of the activation device 3. Regarding this, the information indicative of the authentication failure may be stored in an appropriate storage provided in the engine activation system S 1 insomuch as it can be referred to by the activation device 3.

Also, the respective processing of the flowchart illustrating the control of the illustrative embodiment is shown in one series for convenience. However, the respective control units may process respective subdivided processing in parallel by a multitask control function.

This application is based on Japanese Patent Application No. 2010-033555 filed on February 18, 2010, the disclosures of which are incorporated herein by reference.

## Claims

1. An engine activation device configured to activate an engine installed in a vehicle, comprising:
an activator configured to activate the engine in response to a radio signal from a remote controller;
an acquirer configured to acquire an authentication result of a key code stored in a vehicle key possessed by a user;
a storage configured to store failure information indicative of authentication failure in a case where the acquirer acquires an authentication result that the key code fails to be authenticated after the engine is activated by the activator;
a prohibiter configured to prohibit the activator from activating the engine in a case where the storage stores the failure information; and
a controller configured to keep the engine from deactivating even in a case where the acquirer acquires the authentication result that the key code fails to be authenticated after the engine is activated by the activator.

2. The engine activation device according to claim 1, further comprising an eraser configured to erase the failure information from the storage in a case where the acquirer acquires an authentication result that the key code is duly authenticated.

3. The engine activation device according to claim 1 or 2, further comprising a detector configured to detect whether or not the vehicle is running,
wherein the controller is configured to deactivate the engine in a case where the detector detects that the vehicle is not running and the acquirer acquires the authentication result that the key code fails to be authenticated after the engine is activated by the activator.

4. An engine activation method for activating an engine installed in a vehicle, comprising:
activating the engine in response to a radio signal from a remote controller;
acquiring an authentication result of a key code stored in a vehicle key possessed by a user;
keeping the engine from deactivating and storing failure information indicative of authentication failure in a storage, in a case where it is acquired an authentication result that the key code fails to be authenticated after the engine is activated; and
prohibiting the engine from being activated by the remote controller, in a case where the failure information is stored in the storage.
